# EUROPEAN PATENT APPLICATION

(11) **EP 4 670 897 A1**
(43) Date of publication of application: **31.12.2025**
(21) Application number: 25183576.5
(22) Date of filing: 18.06.2025
(51) Int. Cl.: B23K 26/00, B23K 26/06, B23K 26/073, B23K 26/082

(54) **SYSTEMS FOR LASER BEAM SIZE CONTROL OF A LASER WELDER**

(30) Priority: 24.06.2024 US 202463663322 P; 10.06.2025 US 202519232939
(71) Applicant: Illinois Tool Works Inc., Glenview IL 60025 (US)
(72) Inventor: SCHNEIDER, Joseph C., Glenview, 60025 (US); ALBRECHT, Bruce Patrick, Glenview, 60025 (US); LIU, Shuang, Glenview, 60025 (US)
(74) Representative: HGF

(57) **Abstract**

Systems and methods for laser welding are disclosed. A laser welding system includes a hand held laser welding tool to direct laser power to a workpiece to generate a weld during a laser welding operation. The welding system includes a beam expanding optic to widen a focal point of the laser beam as applied to the workpiece.

## Description

### CROSS REFERENCE TO RELATED APPLICATIONS

This application is a Non-Provisional Patent Application of U.S. Provisional Patent Application No. US 63/663,322 entitled "Systems And Methods For Laser Beam Size Control Of A Laser Welder" filed June 24, 2024, which is herein incorporated by reference in its entirety.

### BACKGROUND

Welding is a process that has historically been a cost effective joining method. Welding is, at its core, a way of bonding two pieces of parent material. Laser welding is a welding technique used to join multiple pieces of metal through the use of a laser. The laser beam provides a concentrated heat source, enabling a precise control of the heat input and high welding speed, creating a weld with low heat input, and a small heat affected zone. In various applications, filler metal may be needed for different purposes such as filling a gap between workpieces, reinforcing the joint, overlaying a substrate surface, building up an object, or acting as a buffering medium.

Conventional laser-based welding tools can create challenges for new users, especially for manually operated laser welders. Even welders with long experience with arc-related welding systems may be unfamiliar with the peculiarities of a laser welding system, including how to achieve a quality weld bead and incorporate laser protection features. Thus, systems and/or methods that facilitate and stabilize welding from laser based welding systems with laser protection features is desirable.

### SUMMARY

This disclosure relates generally to laser welding systems, methods, and apparatuses. More particularly, this disclosure relates to manually operated laser welding systems and torches, which may employ a beam expanding optic, substantially as illustrated by and described in connection with at least one of the figures, as set forth more completely in the claims.

### BRIEF DESCRIPTION OF THE DRAWINGS

These and other features, aspects, and advantages of the present disclosure will become better understood when the following detailed description is read with reference to the accompanying drawings in which like characters represent like parts throughout the drawings, wherein:
FIG. 1 illustrates an example laser type welding system, in accordance with aspects of this disclosure.
FIG. 2 illustrates an example hand held laser welding tool employing a beam expanding optic, in accordance with aspects of this disclosure.
FIGS. 3A and 3B illustrate example hand held laser welding tools, in accordance with aspects of this disclosure.

The figures are not necessarily to scale. Wherever appropriate, similar or identical reference numerals are used to refer to similar or identical components.

### DETAILED DESCRIPTION

Disclosed example systems and methods for laser welding are provided. In particular, disclosed example laser welding systems include a manually operated laser welding torch to direct laser power to a workpiece to generate a puddle during a laser welding operation. The welding system includes a beam expanding optic to widen a focal point of the laser beam as applied to the workpiece.

Laser welding systems, in comparison to traditional electric arc welding systems, provide a high intensity laser beam directed to a relatively small cross sectional area of the workpiece (e.g., a focal point or spot, which may be approximately 1 mm in diameter, but can be as small as 0.2 mm). This high intensity laser beam provides energy sufficient to heat the material (e.g., a metallic workpiece and/or filler wire) and provide welding. However, the small area of the focal point is useful in a variety of welding situations, but is not without disadvantages.

An advantage of employing a small spot size is the laser beam can be scanned with high speed and accuracy, which is effective for welding thinner materials, for example. The aesthetic appearance of such a finished weld can also be desirable for laser welding applications.

However, the visual appearance of the top (e.g., forward edge) of the weld can be misleading to the operator, as the weld bead looks very narrow, which could hint that the weld is not strong to the people who are used to arc welding. As a response, specific controls to the laser beam application (e.g. laser beam power, frequency, scanning pattern, wobble, etc.) and/or slowing the travel of the torch to allow the heat from the laser beam to penetrate the workpiece(s) and spread in a desired manner.

Another concern can be that an experienced arc welder (who may be skilled with and familiar with arc welding power supplies and equipment), is obliged to adapt and change their welding techniques. In particular, the size of the weld bead may need to match up with a traditional welder output (e.g., a gusset spread providing mechanical properties on a T-joint).

Some existing laser systems provide a laser scanning technology whereby the laser is scanned across a surface of the workpiece and/or filler wire, such as by pivoting side-to-side and/or in circles (or some other geometric shape), for example. Although this may improve heat spreading, the scanning distance and impacts therefrom is limited. Hence, there is a need to provide an improved laser system that spreads and/or distributes the heat of the laser beam beyond scanning alone. In practice, this enhanced laser welding system strives to make the laser welding system perform in a manner similar to a traditional arc welder in terms of the arc's ability to spread heat across the weld and/or workpiece.

Advantageously, use of the beam expanding optic and related systems would have significant benefits for laser welding systems to perform more like a traditional arc welding system. In practice, by adding a beam shaping optical lens to a laser welding torch (e.g., handheld or robotic) for situations that typically would benefit from use of a traditional arc welding tool. By comparison, a laser welding torch without the beam expanding and/or shaping optic or optical lens would be better suited for application where a narrower arc is called for.

As used herein, the word "exemplary" means serving as an example, instance, or illustration. The examples described herein are not limiting, but rather are exemplary only. It should be understood that the described examples are not necessarily to be construed as preferred or advantageous over other examples. Moreover, the term "examples" does not require that all examples of the disclosure include the discussed feature, advantage, or mode of operation.

As used herein, a wire-fed welding-type system refers to a system capable of performing welding (e.g., gas metal arc welding (GMAW), gas tungsten arc welding (GTAW), etc.), brazing, cladding, hardfacing, and/or other processes, in which a filler metal is provided by a wire that is fed to a location on the workpiece, such as an arc, a laser beam, or weld puddle.

As used herein, the term "welding-type operation" includes a welding operation employing a laser welding systems using laser energy, operable to fuse, bind, and/or cut one or more materials and/or layers of materials.

As used herein, a welding-type power source refers to any device capable of, when power is applied thereto, supplying welding, cladding, plasma cutting, induction heating, laser (including laser welding and laser cladding), carbon arc cutting or gouging and/or resistive preheating, including but not limited to transformer-rectifiers, inverters, converters, resonant power supplies, quasi-resonant power supplies, switch-mode power supplies, etc., as well as control circuitry and other ancillary circuitry associated therewith.

As used herein, laser beam scanning, laser beam scanning profile, laser scanning profile, or scanning profile, and/or wobble refers to one or more of control of the shape (e.g., common geometric shapes, a rectangle, a triangle, a loop, a circle, a zig-zag, V-shape, a U-shape, a figure-8, etc.), size (e.g., width and/or length), power distribution (e.g., bell curve, ramping up or down, favor one side over the other or center), scanning speed (e.g., over entire scan and/or over discrete portions of the scan), and/or pulse frequency (e.g., over entire scan and/or over discrete portions of the scan) of the laser power on the workpiece and/or the filler material, and any combination thereof.

As used herein, beam expanding optics, which may include beam spreading and/or beam shaping optics, are optical devices that take a beam of light and increase the spot size (e.g., diameter, width) of the laser beam incident on a surface (e.g., of a workpiece). In some examples, laser beam expanding optics increase the diameter of a collimated input beam to a larger collimated output beam. The output beam provides an amount of energy similar to the input beam over an increased area. The output beam may be controlled to scan a desired pattern, and/or output as a series of pulses at a desired frequency.

For the purpose of promoting an understanding of the principles of the claimed technology and presenting its currently understood best mode of operation, reference will be now made to the examples illustrated in the drawings, and specific language will be used to describe the same. It will nevertheless be understood that no limitation of the scope of the claimed technology is thereby intended, with such alterations and further modifications in the illustrated device and such further applications of the principles of the claimed technology as illustrated therein being contemplated as would typically occur to one skilled in the art to which the claimed technology relates.

In disclosed examples, a laser welding system includes a laser source to generate laser power to perform a welding operation; and a handheld laser welding torch to direct the laser power to a workpiece as a laser beam, the handheld laserwelding torch comprising a beam expanding optic to widen a focal point of the laser beam as applied to the workpiece.

In some examples, the beam expanding optic includes one or more of a convex lens, a concave lens, a mirror, or a prism.

In some examples, the beam expanding optic is configured to fully or partially expand a size or shape of the focal point the laser beam.

In some examples, the system further includes a collimating lens to structure the laser beam.

In some examples, the beam expanding optic is removable.

In some examples, the beam expanding optic is mounted within a coupling attached to the handheld laser welding torch.

In some examples, the beam expanding optic comprises first and second lenses, the first lens being movable relative to the second lens to adjust a size or shape of the laser beam applied to the workpiece.

In examples, relative movement between the first lens or the second lens to adjust a size or shape of the laser beam applied to the workpiece.

In examples, the first lens is larger than the second lens.

In examples, the second optic is mounted within a coupling configured to attach to a nozzle of the handheld laser welding torch.

In some examples, the beam expanding optic is arranged within a removable nozzle attachable to the handheld laser welding torch.

In some examples, the system further includes a shield to at least partially protect the beam expanding optic.

In some disclosed examples, a handheld laser welding torch to perform a welding operation includes a beam expanding optic to widen a focal point of the laser beam applied to the workpiece; and a scanning optic to control application of a focal point of the laser beam on the workpiece in X- or Y-directions in accordance with wobble commands.

In some examples, the torch further includes a beam splitter to separate the laser beam into a first beam directed to the beam expanding optic and a second beam directed to the scanning optic.

In some examples, the scanning optic includes one or more of a mirror or galvanometer configured to control movement of the focal point.

In some examples, the beam expanding optic is mounted within a coupling attached to the handheld laser welding torch.

In examples, the coupling and the beam expanding optic is removable.

In some examples, the torch further includes a user interface to receive one or more inputs to control a frequency or a magnitude of the wobble of the laser beam.

In some disclosed examples, a laser welding system includes a laser source to generate one or more laser beams to perform a welding operation; a handheld laser welding torch to direct the one or more laser beams to a workpiece, the handheld laser welding torch comprising a beam expanding optic to widen a focal point of the one or more laser beams as applied to the workpiece; and a laser controller to control a wobble pattern of the one or more laser beam applied to the workpiece.

In some examples, the laser controller comprises a mirror or galvanometer to control application of the focal on the workpiece in X- or Y-directions in accordance with wobble commands.

In some examples, the system further includes a user interface to receive the wobble commands to control the frequency or magnitude of the wobble pattern of the laser beam.

In some examples, the user interface provides a list of wobble variables or wobble patterns corresponding to the wobble commands.

In some examples, the beam expander outputs a first laser beam of the one or more laser beams with a first width corresponding to a first wobble pattern, and outputs a second laser beam of the one or more laser beams with a second width corresponding to a second wobble pattern.

In some disclosed examples, a beam expanding optic for a laser welding torch, the beam expanding optic to receive a laser beam from a laser generator and widen a focal point of the laser beam to provide an expanded output beam applied to a workpiece to perform a welding operation.

In some examples, the system further includes a scanning optic to control application of a focal point of the laser beam on the workpiece in X- or Y-directions.

In some examples, the laser beam is transmitted through the beam expanding optic and then through the scanning optic to perform the welding operation.

In some examples, the laser beam is transmitted through the scanning optic and then through the beam expanding optic to perform the welding operation.

In some examples, the laser welding torch is controlled by a collaborative robot (cobot).

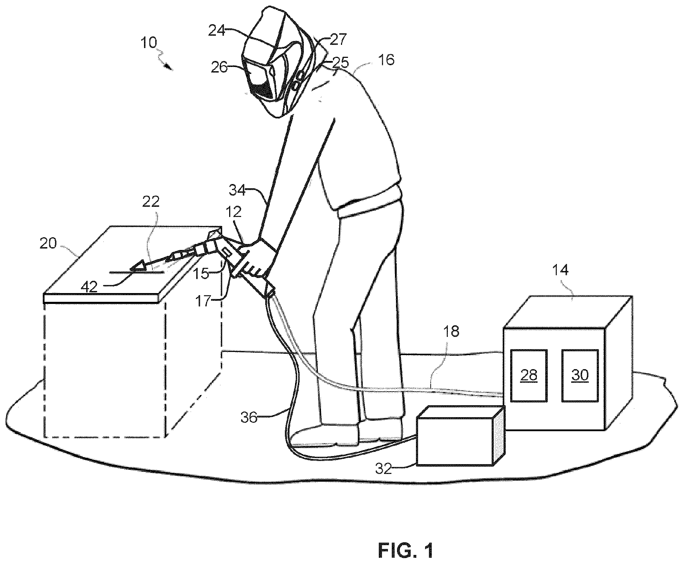

Turning to the figures, FIG. 1 provides a schematic diagram of an example laser welding system 10. The example laser welding system 10 of FIG. 1 includes a laser welding power supply 14, a laser power source 28, a laser controller 30, and a wire feeder 32. A laser welding torch 12 is connected to the power supply 14 via power cable 18, and receives wire 36 from the wire feeder 32.

The laser source 28 generates welding-type laser power 42 (e.g., directed light energy) based on input power received from the power supply 14. The laser source 28 may be a light emitting a CO2 laser, Nd:YAG laser, diode-type laser, fiber laser, disk laser or any other type of laser generator. As used herein, welding-type lasing power refers to laser power having wavelength(s) that are suitable for delivering energy to metal for welding, cutting, and/or cladding.

An operator 16 can wear one or more of a wearable 34 (such as a glove, a smartwatch, etc.) and/or a helmet 24. In some examples, the helmet 24 includes a screen 26, which may be configured to automatically dim when exposed to intense light, may be a filter for one or more wavelengths, and/or may be connected to another part of the system (e.g., controller 30). This allows the screen 26 to present information to the operator 16 to inform the welding process. In some examples, a helmet can include an auto-darkening filter (ADF). The filter may block and/or respond to specific wavelengths associated with laser welding, for instance, to darken the view screen. The filtering feature can also be applied to goggles and/or glasses.

In some examples, within the helmet, goggles, and/or glasses, a screen can be within view of the user, providing the view of a camera. This can be limited to the view from the camera, or may provide an augmented reality (AR) and/or virtual reality (VR) image. In some examples, the helmet 24 may include a sensor 27 (e.g., a heat sensor, a light sensor, an inertial measurement unit (IMU), an accelerometer, etc.) and/or a camera 25 (e.g., optical camera, infrared (IR) camera, etc.).

The torch 12 focuses the laser power 42 at a joint or weld 22 on a workpiece 20. The laser power 42 heats the workpiece 20 to generate a puddle during welding operations. The wire feeder 32 feeds the wire 36 (e.g., filler wire, cladding material, metal additive) to the puddle generated by the laser power 42. The wire 36 melts into the puddle in the weld 22. The wire 36 may be fed from a wire supply, such as a wire reel or wire supply drum, and may be conveyed through a cable or other suitable conduit.

During a welding process, the laser controller 30 controls a focal point of the laser beam to wobble in multiple axes as applied to the workpiece 20. By moving the focal point in multiple directions, the laser can induce one or more beneficial effects in the weld. Examples of such beneficial effects that can be induced in the lateral direction(s) include agitating or stirring of the puddle laterally (including in patterns) to improve filler mixing, creating a heat gradient in the puddle in at least a partially lateral direction to induce movement and improve puddle wetting, and/or controlling the heating and/or cooling rates of the puddle in at least a partially lateral direction by controlling where heat is concentrated.

In some examples, movement of the focal point of the laser beam is controlled such that side-to-side motion is variable, random, and/or has multiple changing directions, angles, and/or lengths. For instance, side-to-side movement of the focal point may promote gap filling, wetting at the toes of a workpiece, etc., and may be set to a high wobble frequency (e.g., greater than 100 wobbles/movements per second). An additional, possibly independently controlled forward-backward motion at a lower wobble frequency could be used to result in a substantially rippled appearance, similar to a traditional ripple look of tungsten inert gas (TIG) welds, and/or other desirable characteristics.

In some examples, the wire feeder 32 can be fitted with one or more devices to control lateral movements of the wire 36, in additional to forward or backward movement thereof. For instance, the wire 36 may be channeled to the workpiece 20 and experience a force (e.g., from an actuator, barrier, a mechanical biasing element, etc.) which causes the wire 36 to move in a lateral pattern, circular motion, or other movement. In examples, patterned movement of the wire 36 can be controlled to sync with and/or complement the application of the laser beam 42. This can include applying a portion of the laser beam over the wire prior to the wire entering a weld bead (e.g., for preheating) and/or scanning the laser beam in a pattern, then controlling the wire to follow the pattern to enhance deposition rates and/or travel speed.

In some examples, a preheating device 15 (e.g., a resistive and/or inductive heater) is employed at or near the laser welding torch 12. Employing preheating can lower the amount of laser energy required to perform a weld, and/or increase the speed and/or amount of wire applied to a given weld. The preheating device 15 may include one or more sensors to gauge a temperature and/or enthalpy of the wire and/or workpiece. In some examples, the preheating device 15 includes and/or is operationally connected to an auxiliary switch (e.g., an arc clamp) to divert a portion of electrical current from the wire. In other words, if the laser welding system 10 senses an arc is forming between the wire 42 and a surface of the torch (e.g., nozzle, neck, etc.) and/or the workpiece 20 during a laser welding operation, the auxiliary switch can close a circuit to direct current away from the wire to avoid arcing between the wire and a metallic surface.

The laser beam 42 can be controlled in any desired pattern, which may include, but is not limited to, a pattern with one or more straight lines and/or one or more curves. In some embodiments, the desired pattern may include a pause or break in the pattern, such as a time interval in which the focal point does not move. The desired pattern may include a circle, an ellipse, a zigzag, a figure 8, a transverse reciprocating line, a crescent, a triangle, a square, a rectangle, a non-linear pattern, an asymmetrical pattern, a pause, or any combination thereof. As may be appreciated, a pattern or a combination of patterns may be used and optimized for particular welds and/or welding positions. The movement of the focal point and the relative movement between the workpiece 20 and the laser welding torch 12 causes the focal point to trace a superimposed pattern over the workpiece 20. The example pattern may be traced by the laser beam 42 to agitate the puddle.

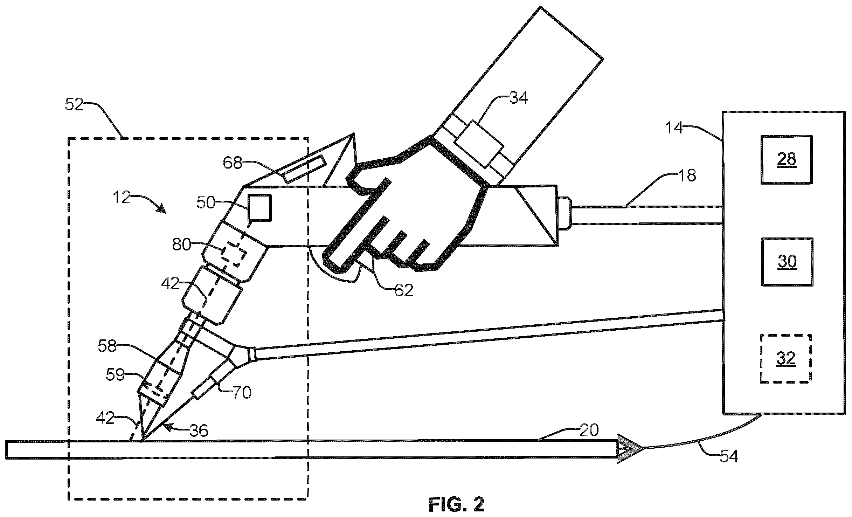

In some disclosed examples, a laser welding system may employ one or more lasers or laser beams to join multiple workpieces and/or create an object via additive manufacturing techniques. In some examples and shown in FIG. 2, a hand held laser tool 12 directs a laser beam 42 to focus on a location of the workpiece 20. This focal point may correspond to a joint to be welded, but may also result in the laser scanning in one or more patterns, such as near, over and/or about welding wire 36. In some examples, application of the laser beam is configured for cleaning a workpiece, with energy and focal spot settings selected for such an application.

This invention introduces a beam shaping optical lens to spread (i.e. diverge) the laser beam in the head of the torch, just before it leaves the torch, so as to create a wider cross-sectional area of heat provided to the workpiece (see Figure 2). The analogy is a flashlight that is equipped with an adjustable lens that allows the operator to control the light beam. This concept of a beam shaping optical lens could be used in combination with the existing laser control or wobble technology, to even further provide for control and spreading of the heat. Another element to consider is wobbling of the filler wire and the torch arm itself (automated application).

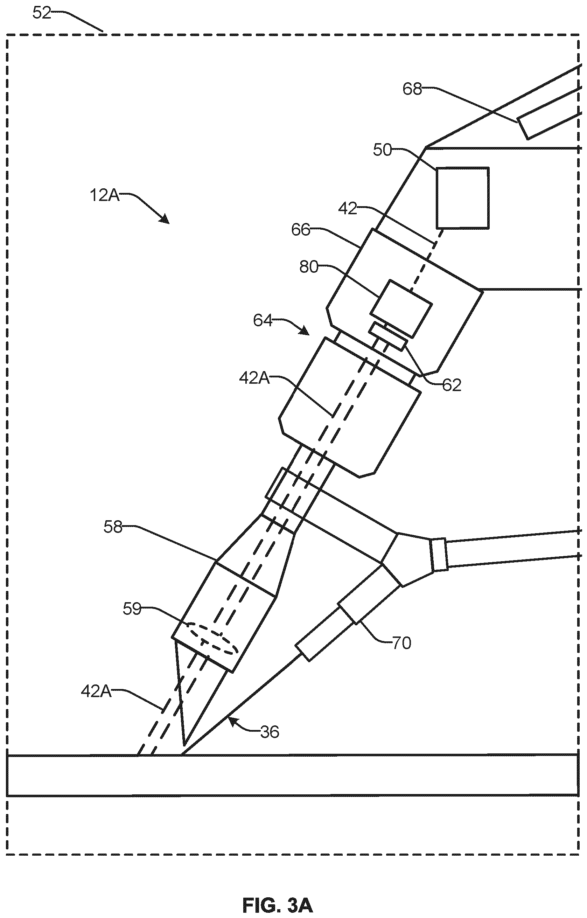

In some examples, the laser generator 28 creates the laser beam 42, which is introduced to the laser welding torch 12 via one or more fiber optics, and delivered to one or more optics 50 within the torch. The beam from the laser generator 28 can transmitted to a beam expanding optic 80 (e.g., beam spreading, beam shaping, etc.) to widen a spot size of the laser beam 42 at the workpiece 20 (as shown in detail 80 of FIG. 3A), and/or split into two or more laser beams for application to the workpiece 20 (e.g., via a filter, a mirror, a lens, a diffraction grating, a gradient index lens, convex lens, a concave lens, a mirror, and/or a prism, etc.). In some examples, the welding wire, or filler material, 36 advances to the workpiece 20 via a tube or channel 70 from a wire feeder 32 (which may be a standalone accessory, or may be incorporated with the laser power supply 14). Although shown being delivered via tube 70, in some examples the wire can be fed through the center of the nozzle 58 (e.g., coaxially), such that the laser beam 42 and the welding wire 36 contact the workpiece and/or the weld bead within a small radius.

In some examples shown in FIG. 2, the hand held laser tool 12 directs one or more laser beams 42 to contact the workpiece 20. The tube or channel 70 guides welding wire 36 to the workpiece 20 from one or more angles. As shown, the tube 70 can be external to the tool 12, and can be attached, mounted, and/or integrated with the tool 12. In some examples, the tube 70 can be configured such that the wire 36 contacts the workpiece 20 in a way that is assisting the operator with moving the torch along at a steady and consistent travel speed.

FIG. 3A illustrates a detailed view of area 52 identified in FIG. 2. As shown, the laser welding torch 12A includes an optic 80 to receive the laser beam 42 from the laser source 30 via optic 50 to perform a welding operation. The handheld laser welding torch 12A directs the laser power to the workpiece 20 as a laser beam, the handheld laser welding torch comprising

In this example, the optic 80 is configured as a beam expanding optic, such that the laser beam 42 a focal point of the laser beam 42 is widened or increased (e.g., a diameter or area) to form an expanded output beam 42A for application to the workpiece 20.

In examples, the beam expanding optic 80 is a single lens configured to fully or partially expand a size or shape of the focal point of the laser beam. In some examples, the optic 80 includes one or more of a convex lens, a concave lens, a mirror, diffraction grating, a gradient index lens, and/or a prism.

In some examples, the handheld laser welding torch 12A includes a collimating lens 62 to structure the laser beam. The collimating lens 62 may be included with the optic 80 and/or along an optical path of the output laser beam 42A. In some examples, a collimating lens can be arranged before the optic 80, after the optic 80, or not be used at all.

As shown, the beam expanding optic 80 is located within a coupling portion 66 of a torch neck 64. In examples, the optic 80 is integrated with the neck 64, whereas in other examples the optic 80 is removable. For example, the beam expanding optic 80 can be mounted within the coupling 66 and removably attached to the handheld laser welding torch 12A.

In some examples, the beam expanding optic 80 includes first and second lenses to expand and/or shape the laser beam 42. For instance, the first lens may be movable relative to the second lens (e.g., via manual rotation, by control from a user interface and movement by a motor or actuator), which serves to adjust a size or shape of the output laser beam 42A applied to the workpiece. The first and second lenses may be separated by an adjustable distance, which changes the diameter of the laser spot on the workpiece.

Although the first and second lenses may be of a similar type, in some examples the first lens has a first power, first diameter, first thickness, or first index of refraction different from the second lens.

In some examples, the laser welding torch 12A further includes a protective lens or shield 59 to at least partially protect the beam expanding optic. In some examples, the protective lens 59 is incorporated within the nozzle, but may also be removable from the nozzle. In some examples, the protective lens 59 further changes the output laser beam 42A, by collimating, expanding, and/or shaping the laser beam.

Although illustrated as the laser being provided from a center of the torch (e.g., via the nozzle 58) and the wire 36 provided at an angle (e.g., from an attached tube), in some examples the wire is provided from the center of the torch and the laser beam at an angle and/or from an attachment. Thus, in some examples, a conventional arc welding torch can be retrofit to use laser welding, whereas a laser welder without a wire feeding tube can be retrofit to receive a wire.

Operation of the wire (e.g., wire feed speed, etc.) and/or laser (e.g., power, scanning pattern, etc.) can be coordinated by the control circuitry 30 (e.g., dynamically and automatically in response to one or more sensor measurements), and/or be controlled by a user interface (e.g., a trigger, button, pedal, etc.). As welders hold a handheld laser tool with their hands, automating changes (e.g., in laser welding parameters, as disclosed herein) and/or coordination between wire feeding and laser application may benefit users. If manual control is desired, a button, trigger, pedal or other device can be used to control the introduction of the welding wire to the weld bead. This can result in a dabbing action or reciprocating motion, with a burst of welding wire advancing quickly for a short amount of time, and/or turning wire feeding on or off during a welding operation.

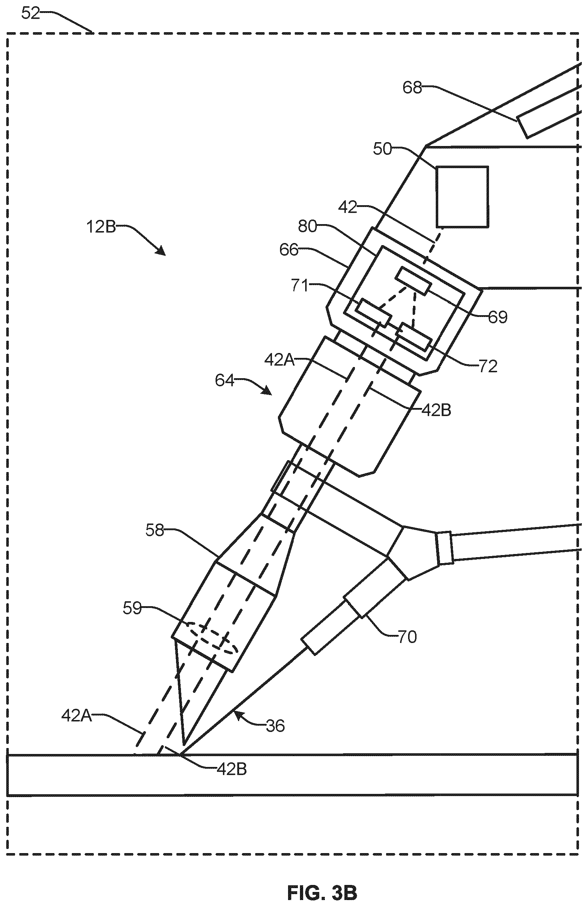

In some examples shown in FIG. 3B, a hand held laser tool 12 includes an optic 66 to split a laser beam 42 into two or more laser beams for application to the workpiece 20 (e.g., via a filter, a mirror, a lens, a diffraction grating, a gradient index lens, etc.), and focused from two or more lenses and/or mirrors to converge at the workpiece 20.

In the detailed illustration within the box identified by reference numeral 52, shown in FIG. 3B, laser beam 42 is split at the optic 66 into two or more laser beams 42A and 42B. The optic 66 may be a complex optic with one or more lenses, mirrors, gratings, and/or prisms within an optical path to split, expand, shape and/or control the laser beams. As shown, a beam splitter 69 splits the laser beam 42 and directs laser beam 42A to a first optic 71, and directs laser beam 42B to a second optic 72.

The laser beams 42A and 42B are delivered through the neck 64 (e.g., via an optical fiber and/or waveguide) and directed to a surface of the workpiece 20. As shown, the laser beams are channeled through optic 59 (e.g., a protective lens). Although shown as impinging on a surface of the workpiece at different focal points, in some examples the laser beams 42A and 42B are configured to converge at a common point, where the power of each beam is combined.

In some examples, one or both of the optics 71 and 72 are beam expanding optics and/or beam control optics (e.g., a mirror or galvanometer) to control scanning and/or wobble of the laser beam on the workpiece. The control optics can be communicably connected to the laser controller, to receive instructions/commands to control the application of the laser light in accordance with a weld schedule or weld profile. In some examples, the control optics are arranged within the nozzle 64 or a coupling and/or extension portion connected to the nozzle.

In some examples, a user interface 68 is configured to receive instructions from an operator to control one or more wobble variables, such as correlating to a desired bead appearance and/or penetration profile (and/or other possible target parameters).

In some examples, a diameter of the laser beam 42 is expanded (e.g., by transmission through a beam expanding optic) and then channeled through a control optic, resulting in an output laser beam 42A with an expanded diameter and capable of being scanned in a desired pattern. In other examples, the laser beam 42 first passes through the control optic, and is then transmitted through the beam expanding optic.

For instance, the control or scanning optic can be configured to control movement of the focal point of the output laser beam on the workpiece in X- or Y-directions in accordance with wobble commands. The control optic can receive the expanded laser output beam and then control movement of the expanded laser output beam on the workpiece.

In some examples, a first, expanded output laser beam can strike the workpiece. The second, scanning laser beam can be controlled to follow a given pattern. For instance, a location of the focal point of the expanded output beam may be substantially limited by the orientation of the welding torch 12B, whereas the focal point of the scanning laser beam is controlled to scan the workpiece surface. This may include occasionally or periodically overlapping with, crossing, and/or encircling the focal point of the first, expanded output beam.

One or both of the beams can be controlled to dynamically adjust a power output. For instance, the beams may be scanned, pulsed, and/or have the desired output power adjusted in accordance with a selected weld.

The handheld laser welding torch 12B may include a user interface 68 to receive one or more inputs to control one or both of the laser output beams. For example, a pattern, frequency and/or a magnitude of the wobble of the laser beams can be set and/or adjusted via the user interface 68.

Although some examples illustrate as a single nozzle 58 delivering two laser output beams 42A and 42B, in some examples two or more nozzles, and three or more laser beams, are used to direct the beams. The nozzles may be from a single laser torch (e.g., a handheld laser welding torch), and/or may provide laser beams from multiple torches (e.g., a robotic laser welding torch).

In some examples, a diameter of the laser beam 42 is expanded (e.g., by transmission through a beam expanding optic) and then channeled through a control optic, resulting in an output laser beam 42A with an expanded diameter and capable of being scanned in a desired pattern. In other examples, the laser beam 42 first passes through the control optic, and is then transmitted through the beam expanding optic.

Although some of the provided examples are directed to handheld laser welding, the systems and techniques disclosed herein may be applied to any number of laser welding systems, such as robotic welding systems and/or collaborative robot (cobot) welding systems.

In some example, two or more laser beams can be applied to the workpiece. This can be achieved by guiding laser beams from two fiber optic cables to the workpiece and/or splitting a single laser beam into two separate beams. The two beams may be controlled differently, such as by the beam expanding optic disclosed herein, and/or via a laser scanning optic to control application of the laser beam on workpiece.

In some examples, the hand held laser welding tool may be used to build an object by additive manufacturing techniques. For instance, predetermined sets of laser welding parameters can be adjusted over time (e.g., during a laser welding operation, in response to historical data), and applied to control and/or optimize changes in a laser power as the laser is applied to various surfaces of the object. For instance, as additive manufacturing progresses, characteristics of the object change, such as temperature, size, smoothness, etc. The laser welding tool can monitor changes in the object characteristics and adjust application of the laser accordingly (e.g., laser power, scanning pattern, etc.). Changes may additionally or alternatively be controlled by a user input (via a user interface, as disclosed herein). This allows for fine and dynamic control of the additive manufacturing process.

As utilized herein the terms "circuits" and "circuitry" refer to physical electronic components (i.e. hardware) and any software and/or firmware ("code") which may configure the hardware, be executed by the hardware, and or otherwise be associated with the hardware. As used herein, for example, a particular processor and memory may comprise a first "circuit" when executing a first one or more lines of code and may comprise a second "circuit" when executing a second one or more lines of code. As utilized herein, "and/or" means any one or more of the items in the list joined by "and/or". As an example, "x and/or y" means any element of the three-element set {(x), (y), (x, y)}. In other words, "x and/or y" means "one or both of x and y". As another example, "x, y, and/or z" means any element of the seven-element set {(x), (y), (z), (x, y), (x, z), (y, z), (x, y, z)}. In other words, "x, y and/or z" means "one or more of x, y and z". As utilized herein, the term "exemplary" means serving as a non-limiting example, instance, or illustration. As utilized herein, the terms "e.g.," and "for example" set off lists of one or more non-limiting examples, instances, or illustrations.

While the present method and/or system has been described with reference to certain implementations, it will be understood by those skilled in the art that various changes may be made and equivalents may be substituted without departing from the scope of the present method and/or system. In addition, many modifications may be made to adapt a particular situation or material to the teachings of the present disclosure without departing from its scope. For example, systems, blocks, and/or other components of disclosed examples may be combined, divided, re-arranged, and/or otherwise modified. Therefore, the present method and/or system are not limited to the particular implementations disclosed. Instead, the present method and/or system will include all implementations falling within the scope of the appended claims, both literally and under the doctrine of equivalents.
Certain embodiments of the invention are described in the following clauses:
Clause 1. A laser welding system, comprising:
   a laser source to generate laser power to perform a welding operation; and
   a handheld laser welding torch to direct the laser power to a workpiece as a laser beam, the handheld laser welding torch comprising a beam expanding optic to widen a focal point of the laser beam as applied to the workpiece.
Clause 2. The laser welding system of clause 1, wherein the beam expanding optic includes one or more of a convex lens, a concave lens, a mirror, or a prism.
Clause 3. The laser welding system of clause 1, wherein the beam expanding optic is configured to fully or partially expand a size or shape of the focal point the laser beam.
Clause 4. The laser welding system of clause 1, further comprising a collimating lens to structure the laser beam.
Clause 5. The laser welding system of clause 1, wherein the beam expanding optic is removable.
Clause 6. The laser welding system of clause 1, wherein the beam expanding optic is mounted within a coupling attached to the handheld laser welding torch.
Clause 7. The laser welding system of clause 1, wherein the beam expanding optic comprises first and second lenses, the first lens being movable relative to the second lens to adjust a size or shape of the laser beam applied to the workpiece.
Clause 8. The laser welding system of clause 7, wherein relative movement between the first lens or the second lens to adjust a size or shape of the laser beam applied to the workpiece.
Clause 9. The laser welding system of clause 7, wherein the first lens is larger than the second lens.
Clause 10. The laser welding system of clause 7, wherein the second optic is mounted within a coupling configured to attach to a nozzle of the handheld laser welding torch.
Clause 11. The laser welding system of clause 1, wherein the beam expanding optic is arranged within a removable nozzle attachable to the handheld laser welding torch.
Clause 12. The laser welding system of clause 1, further comprising a shield to at least partially protect the beam expanding optic.
Clause 13. A handheld laser welding torch to perform a welding operation, comprising:
   a beam expanding optic to widen a focal point of the laser beam applied to the workpiece; and
   a scanning optic to control application of a focal point of the laser beam on the workpiece in X- or Y-directions in accordance with wobble commands.
Clause 14. The handheld laser welding torch of clause 13, further comprising a beam splitter to separate the laser beam into a first beam directed to the beam expanding optic and a second beam directed to the scanning optic.
Clause 15. The handheld laser welding torch of clause 13, wherein the scanning optic includes one or more of a mirror or galvanometer configured to control movement of the focal point.
Clause 16. The handheld laser welding torch of clause 13, wherein the beam expanding optic is mounted within a coupling attached to the handheld laser welding torch.
Clause 17. The handheld laser welding torch of clause 16, wherein the coupling and the beam expanding optic is removable.
Clause 18. The handheld laser welding torch of clause 13, further comprising a user interface to receive one or more inputs to control a frequency or a magnitude of the wobble of the laser beam.
Clause 19. A laser welding system, comprising:
   a laser source to generate one or more laser beams to perform a welding operation;
   a handheld laser welding torch to direct the one or more laser beams to a workpiece, the handheld laser welding torch comprising a beam expanding optic to widen a focal point of the one or more laser beams as applied to the workpiece; and
   a laser controller to control a wobble pattern of the one or more laser beam applied to the workpiece. Clause 20. The laser welding system of clause 19, wherein the laser controller comprises a mirror or galvanometer to control application of the focal on the workpiece in X- or Y-directions in accordance with wobble commands.

## Claims

1. A laser welding system, comprising:
a laser source to generate laser power to perform a welding operation; and
a handheld laser welding torch to direct the laser power to a workpiece as a laser beam, the handheld laser welding torch comprising a beam expanding optic to widen a focal point of the laser beam as applied to the workpiece.

2. The laser welding system of claim 1, wherein the beam expanding optic includes one or more of a convex lens, a concave lens, a mirror, or a prism.

3. The laser welding system of claim 1, wherein the beam expanding optic is configured to fully or partially expand a size or shape of the focal point the laser beam.

4. The laser welding system of claim 1, further comprising a collimating lens to structure the laser beam.

5. The laser welding system of claim 1, wherein the beam expanding optic is removable.

6. The laser welding system of claim 1, wherein the beam expanding optic is mounted within a coupling attached to the handheld laser welding torch.

7. The laser welding system of claim 1, wherein the beam expanding optic comprises first and second lenses, the first lens being movable relative to the second lens to adjust a size or shape of the laser beam applied to the workpiece.

8. The laser welding system of claim 7, wherein relative movement between the first lens or the second lens to adjust a size or shape of the laser beam applied to the workpiece.

9. The laser welding system of claim 7, wherein the first lens is larger than the second lens, or wherein the second optic is mounted within a coupling configured to attach to a nozzle of the handheld laser welding torch.

10. The laser welding system of claim 1, wherein the beam expanding optic is arranged within a removable nozzle attachable to the handheld laser welding torch or wherein laser welding system further comprising a shield to at least partially protect the beam expanding optic.

11. A handheld laser welding torch to perform a welding operation, comprising:
a beam expanding optic to widen a focal point of the laser beam applied to the workpiece; and
a scanning optic to control application of a focal point of the laser beam on the workpiece in X- or Y-directions in accordance with wobble commands.

12. The handheld laser welding torch of claim 11, further comprising a beam splitter to separate the laser beam into a first beam directed to the beam expanding optic and a second beam directed to the scanning optic, or wherein the scanning optic includes one or more of a mirror or galvanometer configured to control movement of the focal point.

13. The handheld laser welding torch of claim 11, wherein the beam expanding optic is mounted within a coupling attached to the handheld laser welding torch, and optionally wherein the coupling and the beam expanding optic is removable.

14. The handheld laser welding torch of claim 11, further comprising a user interface to receive one or more inputs to control a frequency or a magnitude of the wobble of the laser beam.

15. A laser welding system, comprising:
a laser source to generate one or more laser beams to perform a welding operation;
a handheld laser welding torch to direct the one or more laser beams to a workpiece, the handheld laser welding torch comprising a beam expanding optic to widen a focal point of the one or more laser beams as applied to the workpiece; and
a laser controller to control a wobble pattern of the one or more laser beam applied to the workpiece,
and optionally, , wherein the laser controller comprises a mirror or galvanometer to control application of the focal on the workpiece in X- or Y-directions in accordance with wobble commands.
